# EUROPÄISCHE PATENTSCHRIFT

(11) **EP 2 491 327 B1**
(45) Veröffentlichungstag und Bekanntmachung des Hinweises auf die Patenterteilung: **11.12.2013**
(21) Anmeldenummer: 10773578.9
(22) Anmeldetag: 22.10.2010
(51) Int. Cl.: F28D 9/00

(54) **WÄRMEÜBERTRAGERPLATTE UND VERDAMPFER MIT EINER SOLCHEN**
HEAT EXCHANGER PLATE AND EVAPORATOR COMPRISING SAME
PLAQUE D'ÉCHANGE DE CHALEUR ET ÉVAPORATEUR DOTÉ D'UNE TELLE PLAQUE

(30) Priorität: 23.10.2009 DE 102009050482
(43) Veröffentlichungstag der Anmeldung: 29.08.2012
(73) Patentinhaber: Voith Patent GmbH, 89522 Heidenheim (DE)
(72) Erfinder: BERGER, Jürgen, 89547 Gerstetten (DE); AMBROS, Peter, 72127 Kusterdingen (DE); FEZER, Axel, 73061 Ebersbach an der Fils (DE); ORSO, Jochen, 72764 Reutlingen (DE); NECKER, Harald, 72622 Nürtingen (DE)
(74) Vertreter: Weitzel, Wolfgang
(86) Internationale Anmeldenummer: PCT/EP2010/006466
(87) Internationale Veröffentlichungsnummer: WO 2011/047873

(56) Entgegenhaltungen:
- WO-A1-02/090847
- WO-A2-2006/023737
- AU-B2- 550 369
- GB-A- 2 162 302
- US-A- 5 573 060

## Beschreibung

Die vorliegende Erfindung betrifft eine Wärmeübertragerplatte für einen Verdampfer und einen Verdampfer mit einer Vielzahl von aufeinandergestapelten Wärmeübertragerplatten, insbesondere für einen Antriebsstrang, beispielsweise eines Kraftfahrzeugs, Schienenfahrzeugs oder eines Schiffes, mit einem Verbrennungsmotor und einem Dampfmotor, wobei die Wärme eines heißen Mediums, wie zum Beispiel eines heißen Abgasstromes, heißer Ladeluft, Kühlmittels, Kältemittels oder eines Öles des Verbrennungsmotors beziehungsweise eines weiteren im Antriebsstrang vorgesehnen Aggregates, wie beispielsweise einer Fahrzeugklimaanlage, im Verdampfer zur Dampferzeugung des Dampfes für den Dampfmotor verwendet wird. Jedoch ist die vorliegende Erfindung nicht auf die Anwendung in einem mobilen Antriebsstrang begrenzt, sondern auch stationäre Antriebsstränge, beispielsweise in Industrieanwendungen oder Blockheizkraftwerken, können entsprechend ausgeführt werden.

GB 2162302-A beschreibt eine Wärmeübertragerplatte gemäß dem Oberbegriff des Patentanspruchs 1.

Wärmeübertragerplatten beziehungsweise Verdampfer zur Abwärmenutzung in einem Antriebsstrang, insbesondere Kraftfahrzeugantriebsstrang mit einem Verbrennungsmotor, wie sie die vorliegende Erfindung gemäß einer Ausführungsform betrifft, sind seit langem bekannt. Dabei wird zum Beispiel die in einem Abgasstrom des Verbrennungsmotors enthaltene Wärme zum Verdampfen und/oder Überhitzen eines Arbeitsmediums verwendet, und das dampfförmige Arbeitsmedium wird dann unter Freisetzung mechanischer Leistung in einer Expansionsmaschine, das heißt Kolbenmaschine, Turbine oder Schraubenmaschine, entspannt. Nachfolgend zur Expansionsmaschine wird das Arbeitsmedium kondensiert und anschließend wieder dem Verdampfer zugeführt.

Besonders günstig ist die Nutzung der Abgaswärme des rückgeführten Abgasstromes von modernen Dieselmotoren, aber auch von Ottomotoren, da hier das Wärmeangebot auf einem hohen Temperaturniveau verfügbar ist. Gleichzeitig wird die Fahrzeugkühlanlage entlastet, da der Wärmestrom des rückgeführten Abgases aus der Kühlanlage ausgekoppelt und in dem Verdampfungskreisprozess zur Erzeugung von nutzbarer Leistung verwendet wird. Gleichzeitig oder alternativ ist es vorteilhaft, den Restabgasstrom, der bisher ungenutzt aus dem Endschalldämpfer in die Umgebung ausströmt, für die Vorwärmung, Verdampfung und/oder Überhitzung eines Arbeitsmediums zu nutzen.

Eine weitere Wärmequelle, die wenigstens zur Vorwärmung, teilweisen Verdampfung oder auch zur vollständigen Verdampfung des Arbeitsmediums bei einem solchen Antriebsstrang herangezogen werden kann, ist die im Kühlmittel eines Kühlkreislaufs des Kraftfahrzeugs beziehungsweise des Verbrennungsmotors enthaltene Wärme. Weitere Wärmequellen ergeben sich durch eine Abgasrückführung sowie die Ladeluftkühlung von Fahrzeugmotoren sowie die Zwischenkühlung bei mehrstufiger Aufladung des Verbrennungsmotors. Alternativ oder zusätzlich kann auch eine separate Brennereinheit vorgesehen sein, oder die Wärme anderer im Antriebsstrang, insbesondere Kraftfahrzeugantriebstrang vorhandener Wärmequellen genutzt werden, wie zum Beispiel Motoröl, Getriebeöl oder Hydrauliköl sowie beispielsweise von dort vorgesehenen Elektronikkomponenten, Elektromotoren, Generatoren oder Batterien.

Die in der Expansionsmaschine aus der Abwärme erzeugte mechanische Leistung kann im Antriebsstrang genutzt werden, entweder zum Antrieb von Nebenaggregaten oder einem elektrischen Generator. Auch ist es möglich, die Antriebsleistung unmittelbar zum Antrieb des Kraftfahrzeugs, das heißt zur Traktion, zu verwenden, um dadurch den Verbrennungsmotor entweder kleiner ausführen zu können, den Kraftstoffverbrauch zu senken oder mehr Antriebsleistung zur Verfügung stellen zu können.

An die Wärmeübertragerplatten beziehungsweise die Verdampfer in den genannten Anwendungsbereichen werden verschiedene Anforderungen gestellt. Zum einen sollen sie einen hohen Wirkungsgrad aufweisen und zuverlässig arbeiten. Zum anderen sollen sie kostengünstig herstellbar sein und ein geringes Bauvolumen und ein geringes Gewicht aufweisen. Schließlich ergibt sich beim Einsatz im Abgasstrom eines Verbrennungsmotors das Problem, dass der Volumenstrom des Abgases während des Betriebs des Verbrennungsmotors extrem variiert und ferner Temperaturschwankungen unterliegt. Die Wärmeübertragerplatte beziehungsweise der Verdampfer muss diese Volumenstromschwankungen und Temperaturschwankungen sicher beherrschen und in jedem möglichen Zustand die gewünschte Verdampfung des Arbeitsmediums sicher bewirken.

In der Praxis hat sich nun herausgestellt, dass die Wärmeübertragerplatten beziehungsweise Verdampfer mit vergleichsweise langen Strömungskanälen für das zu verdampfende Medium, welche aufgrund des begrenzten zur Verfügung stehenden Bauraums in ihrem Strömungsquerschnitt vergleichsweise klein ausfallen, in bestimmten Betriebszuständen zum Spucken neigen. Beim Phänomen des Spuckens erfolgt keine kontinuierliche Durchströmung der Wärmeübertragerplatten beziehungsweise des Verdampfers mit dem zu verdampfenden Arbeitsmedium, sondern das Arbeitsmedium tritt stoßweise aus dem Verdampfer beziehungsweise den Strömungskanälen der Wärmeübertragerplatten in teils flüssigem, teils überhitzten Aggregatzustand aus. Dieses diskontinuierliche Phänomen kann innerhalb einer Wärmeübertragerplatte, aber auch bei mehreren parallel geschalteten Platten eines Verdampfers auftreten. Verursacht wird es dadurch, dass sich in einem Bereich der Strömungskanäle eine Dampfblase ausbildet, welche die Strömung von noch nicht verdampftem Arbeitsmedium in diesem Bereich blockiert. Hieraus ergibt sich eine Ausweichströmung des noch nicht verdampften Arbeitsmediums im Bereich außerhalb jenes Bereiches in dem Strömungskanal mit der Dampfblase. Der relativ vergrößerte Volumenstrom durch die Ausweichströmung in den Bereichen außerhalb der Dampfblase führt nun zu einer relativen Abkühlung des Ausweichbereiches, was dazu führt, dass flüssiges Arbeitsmedium ausgestoßen wird, die Dampfblase weiter wächst und das Problem der Blockade verschärft wird. Wenn dann die Dampfblase später zusammenbricht, erfolgt eine schlagartige erneute Durchströmung jenes vorher durch die Dampfblase besetzten Bereiches mit noch nicht verdampftem Arbeitsmedium, was zu einer schlagartigen Verdampfung führt. Dieses instationäre Verhalten führt gleichzeitig zu einer extremen Temperaturwechselbeanspruchung der Materialen innerhalb des Verdampfers und damit zu einer drastischen Verringerung der Lebensdauer.

Werden mehrere Wärmeübertragerplatten parallel von einem zu verdampfenden Arbeitsmediumstrom durchströmt, so verschärft sich dieses Inhomogenitäts- aber auch Instabilitätsproblem. Beginnt in einer ersten Platte die Verdampfung früher als in einer zweiten, so steigt in dieser ersten Platte infolge der einsetzenden Verdampfung der Druckverlust stark an, was zu einer Reduzierung des Arbeitsmediumdurchsatzes in dieser Platte und damit zu einer weiteren Verstärkung der Verdampfung führt. Fördert die Arbeitsmediumspeisepumpe näherungsweise einen konstanten Arbeitsmediummassenstrom, so erhöht sich gleichzeitig der Arbeitsmediumdurchsatz in der zweiten Platte, was dort die Verdampfung erschwert beziehungsweise ganz verhindert. Als Folge werden die erste Platte stark überhitzen Dampf und die zweite Platte teilverdampftes oder unterkühltes flüssiges Arbeitsmedium am Plattenaustritt zur Verfügung stellen.

Wenn nun zur Abhilfe die Strömungskanäle mit besonders großen Querschnitt ausgeführt werden, um eine Blockade durch eine Dampfblase zu vermeiden, so ergibt sich aufgrund des begrenzten zur Verfügung stehenden Bauraums zwingend eine vergleichsweise kurze Länge der Strömungskanäle, was zum einen ungünstig hinsichtlich des gewünschten Wärmeeintrags in das zu verdampfende Medium ist. Außerdem droht die Gefahr, dass in Betriebszuständen mit sehr kleinen Massenströmen eine Ungleichverteilung des zu verdampfenden Mediums innerhalb der Strömungskanäle auftritt.

Zum druckschriftlichen Stand der Technik wird auf die folgenden Dokumente verwiesen:
US 4 665 975 A
DE 10 2006 013 503 A1
DE 30 28 394 A1
DE 10 2006 031 676 A1.

Aus der US 4 665 975 A ist eine Wärmeübertragerplatte mit parallelen mäanderförmigen Einströmkanälen bekannt, an welche sich in Längsrichtung angeordnete Verdampfungskanäle anschließen. Zur Strömungsverteilung auf die verschiedenen Verdampfungskanäle sind in Querrichtung verlaufende Strömungskanäle mit vergleichsweise großem Querschnitt vorgesehen.

Der vorliegenden Erfindung liegt die Aufgabe zugrunde, eine Wärmeübertragerplatte beziehungsweise einen Verdampfer mit einer Vielzahl solcher Wärmeübertragerplatten anzugeben, welche/welcher zum einen die eingangs genannten Anforderungen erfüllt, einen optimalen Wärmeübergang in das zu verdampfende Arbeitsmedium sicherstellt und zugleich das vorstehend beschriebene Problem der Blockade durch Dampfblasen sicher verhindert.

Die erfindungsgemäße Aufgabe wird durch eine Wärmeübertragerplatte gemäß Anspruch 1 gelöst. Die abhängigen Ansprüche beschreiben vorteilhafte Ausgestaltungen sowie einen Verdampfer mit einer Vielzahl solcher Wärmeübertragerplatten.

Die erfindungsgemäße Wärmeübertragerplatte für einen Verdampfer weist eine Längsachse und eine Querachse auf, wobei die Querachse senkrecht oder im Wesentlichen senkrecht auf der Längsachse steht. Ferner ist wenigstens ein Strömungskanal für das zu verdampfende Medium (Arbeitsmedium) vorgesehen, der zumindest überwiegend in Richtung der Längsachse der Wärmeübertragerplatte durch einen Wärmezufuhrbereich der Wärmeübertragerplatte verläuft und das zu verdampfende Medium führt. Besonders vorteilhaft sind jedoch mehrere solcher Strömungskanäle zumindest überwiegend in Richtung der Längsachse der Wärmeübertragerplatte verlaufend vorgesehen, durch die das zu verdampfende Medium unter Aufnahme von Wärme gleichzeitig strömt. Zumindest überwiegend in Richtung der Längsachse verlaufend bedeutet dabei, dass nicht nur geradlinige Strömungskanäle, die exakt in Richtung der Längsachse verlaufen, vorgesehen werden können, sondern auch Strömungskanäle, die in ihrem Verlauf einen gewissen Anteil von Strömungsführung in Richtung der Querachse oder schräg hierzu aufweisen, beispielsweise durch kurze Stege oder dergleichen, wobei jedoch die Hauptströmungsrichtung in Richtung der Längsachse besteht und der Durchströmungsdruckverlust in Längsrichtung deutlich geringer ist als in Querrichtung, sofern, wie später noch erläutert wird, Strömungskanäle nebeneinander vorgesehen werden, die ein Austausch von zu verdampfendem Medium untereinander ermöglichen, wobei dieser Austausch dann in der Regel in Richtung der Querachse oder schräg hierzu erfolgt. Im Nachfolgenden wird der Einfachheit halber nur noch Bezug auf den in Richtung der Längsachse verlaufenden Strömungskanal Bezug genommen, ohne dass jedes Mal herausgestellt wird, dass gewisse Richtungsabweichungen zulässig sind.

Es ist wenigstens ein Einlass für das zu verdampfende Medium vorgesehen, der in strömungsleitender Verbindung mit dem wenigstens einen in Richtung der Längsachse der Wärmeübertragerplatte verlaufenden Strömungskanal steht, sodass das durch den Einlass strömende zu verdampfende Medium nachfolgend, jedoch nicht unmittelbar nachfolgend, wie noch erläutert wird, durch den wenigstens einen Strömungskanal oder die Vielzahl von Strömungskanälen in Richtung der Längsachse der Wärmeübertragerplatte strömt.

Erfindungsgemäß ist in Richtung der Längsachse zwischen dem Einlass und dem wenigstens einen, in Richtung der Längsachse verlaufenden Strömungskanal ein mäanderförmiger Einströmkanal vorgesehen, der sowohl in strömungsleitender Verbindung mit dem Einlass als auch in strömungsleitender Verbindung mit dem wenigstens einen Strömungskanal steht und somit das zu verdampfende Medium, das aus dem Einlass zu dem wenigstens einen Strömungskanal strömt, wechselseitig entlang der Querachse und gleichzeitig in Richtung des wenigstens einen Strömungskanals führt. Der mäanderförmige Einströmkanal wird durch eine Vielzahl von auf der Wärmeübertragerplatte oder einer Grundplatte, welche den Boden oder die Decke des Einströmkanals sowie des wenigstens einen in Richtung der Längsachse angeordneten Strömungskanals ausbildet, stehenden Stegen gebildet, die in Richtung der Querachse verlaufen. Der Einströmkanal zwischen den Stegen ist durch eine Vielzahl von Lamellen, die in Richtung der Querachse verlaufen, in einzelne Teilkanäle unterteilt. Diese Unterteilung in Teilkanäle kann, wie nachfolgend noch erläutert wird, entweder eine Querströmung oder Nebenströmung senkrecht zur Hauptströmungsrichtung ermöglichen, indem die Lamellen mit Öffnungen versehen sind, oder die einzelnen Teilkanäle können gegeneinander abgedichtet sein, indem Lamellen ohne Öffnungen vorgesehen sind.

Demnach gibt es auf der erfindungsgemäßen Wärmeübertragerplatte zwei sich aneinander anschließende Bereiche mit unterschiedlichen Hauptströmungsrichtungen des zu verdampfenden Mediums. Während in dem mäanderförmigen Einströmkanal die Hauptströmungsrichtung in Richtung der Querachse verläuft, verläuft sie in dem wenigstens einen Strömungskanal, der sich unmittelbar oder mittelbar an den Einströmkanal anschließt, in Richtung der Längsachse. Wenn nun die Wärmezufuhr über die Wärmeübertragerplatte zur Verdampfung des zu verdampfenden Mediums derart ausgeführt wird, dass das zu verdampfende Medium innerhalb des Einströmkanals ausschließlich oder im Wesentlichen in flüssigem Zustand vorliegt und Dampfblasen erst dann auftreten, wenn das Medium diesen Einströmkanal bereits verlassen hat und sich in dem wenigstens einen Strömungskanal, der in Richtung der Längsachse der Wärmeübertragerplatte verläuft, befindet, so kann der Strömungsquerschnitt für das zu verdampfende Medium im Einströmkanal wesentlich kleiner ausgeführt werden, als im nachfolgenden in Richtung der Längsachse angeordneten wenigstens einen Strömungskanal beziehungsweise als der Gesamtquerschnitt aller nebeneinander angeordneter in Richtung der Längsachse verlaufender Strömungskanäle, durch die das zu verdampfende Medium gleichzeitig strömt, was bedeutet, dass die Wärmeübertragerplatte auf der einen Seite äußerst kompakt ausgeführt werden kann, bei verhältnismäßig langem Strömungskanal für das zu verdampfende Medium, und auf der anderen Seite in jenem Bereich, in dem sich Dampfblasen bilden, ein solch großer Strömungsquerschnitt für das zu verdampfende Medium zur Verfügung gestellt wird, dass eine Blockierung der gesamten Wärmeübertragerplatte beziehungsweise des gesamten für die Strömung zur Verfügung stehenden Strömungsquerschnitts verhindert wird. Der Verdampfer kann demnach nicht mehr spucken.

Besonders vorteilhaft sind die einzelnen Strömungskanäle, die in Richtung der Längsachse angeordnet sind, durch in Richtung der Längsachse verlaufende Lamellen voneinander abgegrenzt. Gemäß einer ersten Ausführungsform sind die einzelnen, nebeneinander vorgesehenen Strömungskanäle durch die Lamellen gegeneinander abgedichtet. Gemäß einer zweiten Ausführungsform sind die Lamellen mit Öffnungen versehen, sodass eine Querströmung von zu verdampfendem Medium zwischen den einzelnen Strömungskanälen erfolgen kann. Im erstgenannten Fall wird erreicht, dass sich eine bildende Dampfblase nicht in benachbarte Strömungskanäle ausdehnen kann. Gemäß der zweiten Ausführungsform kann, in Abhängigkeit des zur Verfügung stehenden Strömungsquerschnitts eines jeden einzelnen Strömungskanals und dem maximal durchzuleitenden Volumenstrom von zu verdampfendem Medium günstigenfalls erreicht werden, dass keine vollständige Blockade eines einzelnen Strömungskanals durch eine Dampfblase erfolgt.

Auch der Einströmkanal kann durch Lamellen, die dann insbesondere in Richtung der Querachse verlaufen, in einzelne Teilkanäle unterteilt sein. Auch hier sind wieder beide Ausführungsformen möglich, Lamellen mit Öffnungen, um eine Querströmung oder Nebenströmung senkrecht zur Hauptströmungsrichtung zu ermöglichen, und Lamellen ohne Öffnungen, welche die einzelnen Teilkanäle gegeneinander abdichten.

Wenn nun das zu verdampfende Medium aus dem Einströmkanal ausströmt, so sollte es für eine optimale Verdampfung möglichst gleichmäßig auf den gesamten Strömungsquerschnitt des in Richtung der Längsachse der Wärmeübertragerplatte angeordneten Strömungskanals beziehungsweise auf alle nebeneinander angeordnete, in Längsrichtung der Wärmeübertragerplatte verlaufenden Strömungskanäle verteilt werden. Dies kann gemäß einer vorteilhaften Ausführungsform dadurch erreicht werden, dass in Richtung der Längsachse zwischen dem mäanderförmigen Einströmkanal und dem wenigstens einen in Richtung der Längsachse verlaufenden Strömungskanal eine Strömungsquerverteilungseinrichtung vorgesehen ist, welche strömungsweglängenbedingte Druckverluste zwischen dem Austritt aus dem Einströmkanal und den verschiedenen Positionen des Eintritts in den wenigstens einen Strömungskanal beziehungsweise den verschiedenen Eintritten der verschiedenen Strömungskanäle ausgleicht. Die Strömungsquerverteilungseinrichtung erhöht den Strömungswiderstand auf den vergleichsweise kurzen Strecken zwischen dem Austritt des zu verdampfenden Mediums aus dem Einströmkanal und dem Eintritt in den wenigstens einen in Längsrichtung angeordneten Strömungskanal im Vergleich zu den vergleichsweise längeren Strecken zwischen diesem Austritt und weiter entfernt gelegenen Eintrittspunkten. Auch kann eine solche Strömungsquerverteilungseinrichtung vorgesehen sein, welche den Strömungswiderstand auf den einzelnen vom zu verdampfenden Medium zurückgelegten Strecken von dem Austritt und den einzelnen Eintrittspunkten derart einstellt, dass eine ungleichförmige Wärmezufuhr über der Wärmeübertragerplatte ausgeglichen wird.

Gemäß einer ersten Ausführungsform kann der strömungsweglängenbedingte Druckverlustausgleich durch in Richtung der Längsachse zwischen dem mäanderförmigen Einströmkanal und dem wenigstens einen in Richtung der Längsachse verlaufenden Strömungskanal vorgesehene Lamellen erreicht werden, die in Richtung der Querachse verlaufen und welche das zu verdampfende Medium aus dem Einströmkanal in Richtung zu dem wenigstens einen in Richtung der Längsachse verlaufenden Strömungskanal führen. Die Lamellen weisen Öffnungen auf, die einen vergleichsweise kleineren Gesamtströmungsquerschnitt für das zu verdampfende Medium in Richtung der Längsachse zur Verfügung stellen und somit einen vergleichsweise höheren Strömungswiderstand in Richtung der Längsachse als in Richtung der Querachse herstellen. Dabei ist die Anzahl der in Richtung der Längsachse hintereinander angeordneten Lamellen über der Breite der Wärmeübertragerplatte, das heißt in Richtung der Querachse, variierend ausgeführt, wobei auf jenem Breitenabschnitt, in welchem der Eintritt des zu verdampfenden Mediums in die hintereinander angeordneten Lamellen vorgesehen ist, die vergleichsweise größte Anzahl von Lamellen hintereinander angeordnet ist, und die Anzahl mit zunehmender Entfernung vom Eintritt in Richtung der Querachse abnimmt. Selbstverständlich kann die Strömungsquerverteilungseinrichtung auch anders ausgestaltet sein, beispielsweise durch eine Anpassung der einzelnen Strömungskanäle, die insbesondere in den Lamellen ausgebildet werden, zwischen dem Austritt des zu verdampfenden Mediums aus dem Einströmkanal und dem Eintritt beziehungsweise den verschiedenen Positionen des Eintritts in den wenigstens einen in Richtung der Längsachse angeordneten Strömungskanal. So können einzelne Strömungskanalkonturen mit einem kleineren und andere mit einem größeren Querschnitt versehen sein, oder ein Strömungskanal wird öfters umgelenkt als der andere.

Eine alternative oder zusätzliche Maßnahme zum Ausgleich von strömungsweglängenbedingten Druckverlusten sieht in Richtung der Längsachse zwischen dem mäanderförmigen Einströmkanal und dem wenigstens einen in Richtung der Längsachse verlaufenden Strömungskanal eine Drosselstelle vor, welche über der gesamten Breite des wenigstens einen in Richtung der Längsachse verlaufenden Strömungskanals vorgesehen ist und eine Aufstauung des zu verdampfenden Mediums über der gesamten Breite des wenigstens einen in Richtung der Längsachse verlaufenden Strömungskanals bewirkt. Diese Anstauung ist dabei so stark, dass der Druckabfall über der Drosselstelle, bevor das zu verdampfende Medium in den wenigstens einen in Richtung der Längsachse verlaufenden Strömungskanal eintritt, die verschiedenen strömungsweglängenbedingte Druckverluste vor der Drosselstelle bei weitem überwiegt.

Die Drosselstelle kann beispielsweise durch einen oder eine Vielzahl von Stegen ausgebildet sein, welcher/welche in Richtung der Querachse oder mit einem Winkel kleiner als 90 Grad zur Querachse verläuft und wenigstens eine Drosselöffnung aufweist oder begrenzt. Der Steg oder die Vielzahl von Stegen kann beispielsweise gemeinsam mit einer Grundplatte der Wärmeübertragerplatte, welche den Boden oder die Decke des Einströmkanals sowie des wenigstens einen in Richtung der Längsachse angeordneten Strömungskanals ausbildet, die Drosselöffnung begrenzen.

Die Strömungsquerverteilungseinrichtung kann derart ausgeführt sein, dass ein vollständiger Ausgleich der strömungsweglängenbedingten Druckverluste erfolgt. Insbesondere ist derart ausgeführt, dass jedes Fluidteilchen beim Eintritt in den wenigstens einen in Richtung der Längsachse verlaufenden Strömungskanal dieselbe Temperatur und/oder dieselbe Geschwindigkeit aufweist. Wenn hierbei der Wärmeeintrag in das zu verdampfende Medium über der Fläche der Wärmeübertragerplatte nicht gleichmäßig ist, können hieraus auch gezielte Ungleichheiten im Druckverlustausgleich mittels der Strömungsquerverteilungseinrichtung erfolgen. Hieraus können auch Unsymmetrien in der Strömungsquerverteilungseinrichtung vorgesehene sein, insbesondere wenn diese, wie nachfolgend noch beschrieben wird, mit einer Vielzahl von strömungsführenden Lamellen ausgeführt ist.

Auch austrittsseitig des wenigstens einen in Längsrichtung der Wärmeübertragerplatte verlaufenden Strömungskanals, bezogen auf die Strömung des zu verdampfenden Mediums, kann eine entsprechende Strömungsquerverteilungseinrichtung vorgesehen sein, welche strömungsweglängenbedingte Druckverluste zwischen dem Austritt aus dem wenigstens einen Strömungskanal und einem Auslass der Wärmeübertragerplatte für das teilweise oder vollständig verdampfte Medium ausgleicht. Auch diese Strömungsquerverteilungseinrichtung kann insbesondere durch Lamellen und/oder einen Steg gebildet werden, wie sie zuvor beschrieben wurden.

Besonders vorteilhaft wird der Einströmkanal durch eine Vielzahl von auf der Wärmeübertragerplatte beziehungsweise der zuvor beschriebenen Grundplatte stehenden Stegen gebildet, die in Richtung der Querachse verlaufen und hintereinander in Richtung der Längsachse abwechselnd beginnend auf je einer der beiden entgegengesetzten Seiten der Wärmeübertragerplatte und sich erstreckend bis zu einem vorgegebenen Abstand zu der jeweils anderen Seite hintereinander angeordnet sind. Beispielsweise beginnt der erste Steg, betrachtet in Richtung der Strömung des zu verdampfenden Mediums durch den wenigstens einen in Richtung der Längsachse angeordneten Strömungskanal, auf der linken Seite und erstreckt sich in Richtung der Querachse bis fast zu der rechten Seite der Wärmeübertragerplatte. Der zweite Steg beginnt dann in Richtung der Längsachse mit Abstand hinter dem ersten Steg auf der rechten Seite und verläuft in Richtung der Querachse bis fast zu der linken Seite. Der dritte Steg würde dann wieder auf der linken Seite beginnen und so weiter. Hierdurch wird die erfindungsgemäß vorgesehene Mäanderform erreicht. Der in Richtung der Längsachse hinterste Steg kann dann entweder im Bereich einer der beiden Seiten der Wärmeübertragerplatte enden. Wenn abweichend das zu verdampfende Medium nicht an einer Seite der Wärmeübertragerplatte aus dem Einströmkanal austreten soll, so sind als letzter Steg zwei sich seitlich gegenüberstehende Teilstege vorgesehen, die eine Öffnung im mittleren Bereich oder auch außerhalb der Mitte freigeben. Es ist jedoch nicht zwingend, dass die Stege beginnend auf je einer der beiden entgegengesetzten Seiten der Wärmeübertragerplatte und sich erstreckend bis zu einem vorgegebenen Abstand zu der jeweils anderen Seite hintereinander angeordnet sind, solange die Mäanderform anders erreicht werden kann.

Ein erfindungsgemäßer Verdampfer zur Verdampfung eines flüssigen Mediums mit einer Vielzahl von aufeinandergestapelten Wärmeübertragerplatten der hier beschriebenen Art umfasst wenigstens einen Flüssigkeitseinlass, der mit den Einlässen auf den Wärmeübertragerplatten in strömungsleitender Verbindung steht, einen Dampfauslass, der mit den in Richtung der Längsachse angeordneten Strömungskanälen auf den Wärmeübertragerplatten und insbesondere mit den zuvor beschriebenen Auslässen dieser Strömungskanäle in strömungsleitender Verbindung steht, sowie einen einen Wärmeträger führenden Kanal und/oder eine andere Wärmequelle, welcher/welche die Wärmeübertragerplatten zur Verdampfung des von diesen durch die Einströmkanäle und die in Richtung der Längsachse angeordneten Strömungskanäle geführten Mediums mit Wärme beaufschlagt.

Die Führung des zu verdampfenden Mediums mittels der Einströmkanäle und der in Richtung der Längsachse angeordneten Strömungskanäle erfolgt wärmebeaufschlagt derart, dass das zu verdampfende Medium in den Einströmkanälen in ausschließlich flüssigem oder nahezu ausschließlich flüssigem Zustand und in den in Richtung der Längsachse der Wärmeübertragerplatten angeordneten Strömungskanälen im wenigstens teilweise dampfförmigen Zustand vorliegt.

Ein erfindungsgemäß ausgeführter Antriebsstrang eines Kraftfahrzeugs mit einem Verbrennungsmotor und einem Dampfmotor, wobei die Erfindung auch bei einem Antriebsstrang außerhalb eines Kraftfahrzeugs Verwendung finden kann, weist einen erfindungsgemäß ausgeführten Verdampfer auf, der im Abgasstrom des Verbrennungsmotors angeordnet ist. Die Wärme aus dem Abgasstrom des Verbrennungsmotors wird mittels der Wärmeübertragerplatten auf den Dampf des Dampfkreislaufes für den Dampfmotor zur Verdampfung übertragen, sodass der Verdampfer auch im Dampfkreislauf angeordnet sein muss.

Die Erfindung soll nachfolgend anhand von Ausführungsbeispielen exemplarisch beschrieben werden:
- Figur 1: eine Draufsicht auf eine erfindungsgemäß ausgeführte Wärmeübertragerplatte mit Strömungsquerverteilungseinrichtungen vor und hinter den in Richtung der Längsachse verlaufenden Strömungskanälen;
- Figur 2: eine Draufsicht auf eine erfindungsgemäß ausgeführte Wärmeübertragerplatte mit einer Drosselstelle vor den in Richtung der Längsachse verlaufenden Strömungskanälen;
- Figur 3: einen vorteilhaften Aufbau einer Wärmeübertragerplatte gemäß der Figur 1 durch schichtweises Aufeinanderverfügen verschiedener Bauteile;
- Figur 4: eine Draufsicht einer möglichen Gestaltung von Lamellen;
- Figur 5: exemplarisch den Aufbau einer erfindungsgemäßen Wärmeübertragerplatte mit der das zu verdampfende Medium führenden Seite und der hierzu abgewandten, den Abgasstrom führenden Seite;
- Figur 6: eine schematische Darstellung eines erfindungsgemäß ausgeführten Verdampfers mit einer Vielzahl von entsprechenden Wärmeübertragerplatten;
- Figur 7: eine Darstellung analog der Figur 3 für eine Wärmeübertragerplatte gemäß der Figur 2;
- Figur 8: gegenüber der Figur 1 abgewandelte Ausführungsform einer Wärmeübertragerplatte 1;
- Figur 9: eine beispielhafte Ausführungsform für eine Lamelle;
- Figur 10: eine Explosionsdarstellung eines Ausführungsbeispiels für einen schichtweise aufgebauten Verdampfer.

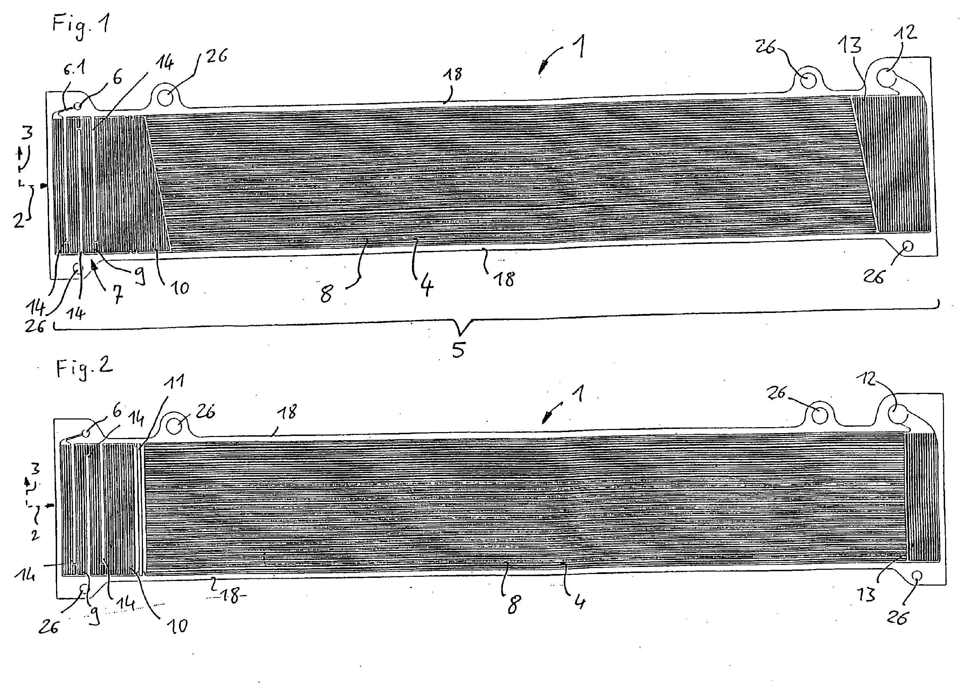

In der Figur 1 ist eine Draufsicht auf eine erfindungsgemäße Wärmeübertragerplatte 1 für einen Verdampfer dargestellt, wobei in der Regel eine Vielzahl solcher Wärmeübertragerplatten 1 aufeinandergeschichtet in einem entsprechenden Verdampfer vorgesehen sind. Zur leichter verständlichen räumlichen Zuordnung sind eine Längsachse 2 und eine Querachse 3 eingezeichnet.

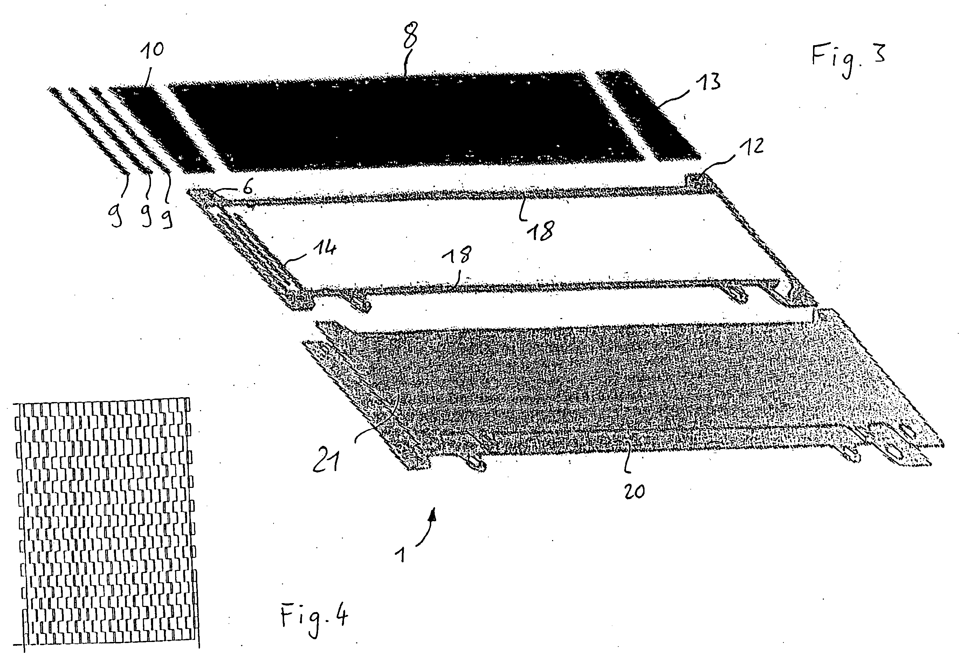

Über den axial größten Bereich der Wärmeübertragerplatte 1 in Richtung der Längsachse 2 verlaufen eine Vielzahl von Strömungskanälen 4, welche das zu verdampfende Medium führen. In dem gezeigten Ausführungsbeispiel sind die einzelnen Strömungskanäle 4 durch Lamellen 8 voneinander abgetrennt. Ferner erstrecken sich, wie man sieht, die Strömungskanäle 4 über der gesamten Breite der Wärmeübertragerplatte 1, bezogen auf die Blickrichtung in Richtung der Längsachse 2 und in Strömungsrichtung des zu verdampfenden Mediums in den Strömungskanälen 4. An den beiden seitlichen Rändern sind lediglich noch Stege 18 vorgesehen, welche - wie sich besonders aus der Figur 3 ergibt - die Seitenwände des strömungsführenden Bereiches der Wärmeübertragerplatte 1 ausbilden und verhindern, dass das zu verdampfende Medium seitlich aus der Wärmeübertragerplatte 1 austritt.

An dem ersten axialen Ende ist ein Einlass 6 für das zu verdampfende Medium vorgesehen. Vorliegend umfasst der Einlass 6 zunächst eine Verteilerbohrung, die durch alle aufeinandergestapelten Wärmeübertragerplatten 1 (in der Figur 1 ist nur eine dargestellt) verläuft und in jeder Wärmeübertragerplatte 1 über einen Kanal 6.1 mit dem eigentlichen Eintritt in einen auf jeder Wärmeübertragerplatte 1 vorgesehenen Einströmkanal 7 strömungsleitend verbunden ist.

Der Einströmkanal 7 erstreckt sich vom ersten axialen Ende beziehungsweise stirnseitigen Ende der Wärmeübertragerplatte 1 in Richtung der in Richtung der Längsachse 2 angeordneten Strömungskanäle 4. Der Einströmkanal 7 ist erfindungsgemäß mäanderförmig ausgebildet, siehe die in Richtung der Querachse 3 verlaufenden Stege 14, welche in Richtung der Längsachse 2 abwechselnd beginnend auf je einer der beiden entgegengesetzten Seiten der Wärmeübertragerplatte 1 und sich erstreckend bis zu einem vorgegebenen Abstand zu der jeweils anderen Seite hintereinander angeordnet sind, sodass das zu verdampfende Medium jeweils entlang eines jeden gesamten Steges 14 in Richtung der Querachse 3 geführt wird, bis es durch den Abstand am seitlichen Ende des Steges 14 in Richtung der Längsachse 2 zu dem nächsten Steg 14 strömt. Die Stege 14 bilden demnach einen einzigen mäanderförmigen Einströmkanal 7, sodass sämtliches durch den Einlass 6 in die Wärmeübertragerplatte 1 eintretende zu verdampfende Medium durch diesen einzigen Einströmkanal 7 strömen muss, bevor es, wie nachfolgend noch im Detail erläutert wird, auf die verschiedenen nebeneinander verlaufenden, in Richtung der Längsachse 2 angeordneten Strömungskanäle 4 verteilt wird.

Der Strömungskanal des Einströmkanals 7 ist, wie dargestellt, durch eine Vielzahl von Lamellen 9, die in Richtung der Querachse 3 verlaufen, in einzelne Teilkanäle unterteilt. Die einzelnen Teilkanäle können durch die Lamellen 9 gegeneinander abgedichtet sein, wobei allerdings im Bereich der Umlenkungen, Durchbrüche oder Aussparungen vorgesehen sind, welche die gewünschte mäanderförmige Durchströmung des Einströmkanals 7 ermöglichen. Alternativ ist es möglich, dass die Lamellen 9 über ihre gesamten Längserstreckungen Öffnungen aufweisen, welche die einzelnen Teilkanäle strömungsleitend miteinander verbinden. Entsprechendes gilt auch für die Lamellen 8, welche die in Richtung der Längsachse 2 verlaufenden Strömungskanäle 4 voneinander abtrennen.

Das durch den Abstand zwischen der letzten Lamelle 14 und der äußeren Seite der Wärmeübertragerplatte 1 aus dem Einströmkanal 7 austretende zu verdampfende Medium strömt in einen axialen Bereich zwischen dem Einströmkanal 7 und den in Richtung der Längsachse 2 verlaufenden Kanäle 4 der Wärmeübertragerplatte 1 ein, welcher zur Ausbildung einer optimalen Strömungsquerverteilung mittels einer Strömungsquerverteilungseinrichtung versehen ist. In der Figur 1 umfasst die Strömungsquerverteilungseinrichtung eine Vielzahl von in Richtung der Querachse 3 verlaufenden Lamellen 10, die in Richtung der Längsachse 2 hintereinander, mit Abstand zueinander angeordnet sind. In jenem äußeren Breitenabschnitt (am unteren Ende der Wärmeübertragerplatte 1 in der Figur 1 dargestellt), in welchem das zu verdampfende Medium aus dem Einströmkanal 7 ausströmt, sind in Richtung der Längsachse 2 die meisten Lamellen 10 hintereinander angeordnet, wohingegen auf der anderen Seite der Wärmeübertragerplatte 1 und somit in jenem Breitenabschnitt, der von dem Auslass des Einströmkanals 7 am weitesten entfernt ist, die wenigsten Lamellen 10 in Richtung der Längsachse 2 hintereinander angeordnet sind. Dies führt in dem gezeigten Ausführungsbeispiel zu einer dreieckförmigen Außenkontur des Lamellenbereiches, wobei die Winkel der Außenkontur von den Lauflängen und den korrelierenden Druckverlusten bei der Durchströmung mit zu verdampfendem Medium in Längs- und Querrichtung gewählt werden können und zum Beispiel durch Simulationsrechnungen oder Messungen bestimmt werden können. Typische gewählte Winkel liegen im Bereich von 0 Grad bis 90 Grad, bevorzugt im Bereich von 0 Grad bis 60 Grad.

Da die Lamellen 10 mit Öffnungen versehen sind, wobei solche Lamellen auch als geschnittene Lamellen bezeichnet werden, ist der Strömungswiderstand für entlang der Lamellen 10 strömendes zu verdampfendes Medium, das heißt in Richtung der Querachse 3 strömendes Medium, zwar geringer als für Medium, das in Richtung der Längsachse 2 durch die Öffnungen in den Lamellen 10 strömt. Allerdings ist eine solche Strömung für das zu verdampfende Medium durch die Öffnungen in den Lamellen 10 und somit entlang einem vergleichsweise kürzeren Weg in Richtung der Längsachse 2 möglich. Da das zu verdampfende Medium jedoch umso mehr Lamellen 10 durchströmen muss, je kürzer der Weg ist, ist der Strömungswiderstand auf diesem kurzen Weg je Wegeinheit entsprechend höher. Im Ergebnis kann hierdurch erreicht werden, dass der Strömungswiderstand auf dem vergleichsweise kürzesten Weg im Wesentlichen dem Strömungswiderstand auf den vergleichsweise längsten Weg und zugleich dem Strömungswiderstand auf allen hinsichtlich ihrer Länge dazwischenliegenden Wegen entspricht. Beispielsweise ist der Strömungswiderstand für zu verdampfendes Medium, das aus dem Einströmkanal 7 heraus und geradeaus in Richtung der Längsachse 2 in die Strömungskanäle 4 strömt, genauso groß wie für jenes Medium, das aus dem Einströmkanal 7 zunächst in Richtung der Querachse 3 auf die andere Seite der Wärmeübertragerplatte 1 strömt und anschließend in Richtung der Längsachse 2 geradeaus in die Strömungskanäle 4. Durch diese besondere Anordnung der Lamelle 10 kann eine gleichmäßige Verteilung des aus dem Einströmkanal 7 strömenden zu verdampfenden Mediums auf alle in Richtung der Längsachse 2 verlaufende Strömungskanäle 4 erreicht werden.

Am anderen axialen Ende der Wärmeübertragerplatte 1 beziehungsweise der in Richtung der Längsachse 2 verlaufenden Strömungskanäle 4 ist gemäß der Figur 1 eine entsprechende zweite Strömungsquerverteilungseinrichtung vorgesehen, vorliegend umfassend die in Richtung der Querachse 3 verlaufenden Lamellen 13. Diese zweite Strömungsquerverteilungseinrichtung verbindet die Vielzahl von in Richtung der Längsachse 2 verlaufenden Strömungskanälen 4 mit einem Auslass 12 für das teilweise oder vollständig verdampfte Medium. Vorliegend ist der Auslass 12 wiederum als Durchgangsbohrung durch die Vielzahl von aufeinandergestapelten Wärmeübertragerplatten 1 ausgeführt, um das aus einer Wärmeübertragerplatte 1 ausströmende verdampfte Medium mit jenem der anderen Platten zu vereinigen und dann aus dem Verdampfer, welcher die entsprechenden Wärmeübertragerplatten umfasst, abzuführen.

Das Prinzip, nach welchem die zweite Strömungsquerverteilungseinrichtung arbeitet, entspricht exakt jenem der ersten Strömungsquerverteilungseinrichtung in Richtung der Längsachse 2 zwischen dem Einströmkanal 7 und den Strömungskanälen 4. Auch hier bilden die Lamellen 13 einen Strömungsweg für das verdampfte Medium in Richtung der Längsachse 2 mit einem verhältnismäßig größeren Strömungswiderstand im Vergleich zu dem durch die Lamellen 13 in Richtung der Querachse 3 verlaufenden Strömungsweg. In jenem Breitenabschnitt, in welchem der Auslass 12 vorgesehen beziehungsweise an den Lamellen 13 angeschlossen ist, ist eine vergleichsweise größere Anzahl von Lamellen 13 in Richtung der Längsachse 2 vorgesehen; vorliegend ist dies der in der Figur 1 dargestellte oberste Breitenabschnitt. Der am weitesten von dem Auslass 12 entfernte Breitenabschnitt hingegen weist die geringste Anzahl von Lamellen in Richtung der Längsachse 2 auf, siehe den untersten Breitenabschnitt in der Figur 1. Somit ist der Strömungswiderstand für sämtliches verdampftes Medium, das aus der Vielzahl von Strömungskanälen 4 ausströmt und in den Auslass 12 strömt, ungeachtet der Länge des durch dieses verdampfte Medium zurückgelegten Weges im Wesentlichen derselbe.

Im Sinne einer ausschussarmen Fertigung können die Lamellen 10 und die Lamellen 13 zunächst als gemeinsames Lamellenfeld hergestellt werden und anschließend voneinander getrennt werden. Insbesondere erfolgt dies durch einen schrägen Schnitt, sodass der Winkel - bezogen auf die Richtung der Längsachse 2 in Strömungsrichtung - am hinteren Ende des Feldes mit den Lamellen 10 dem Winkel zu Beginn des Feldes mit den Lamellen 13 entspricht. Um dann die gewünschte variierende Anzahl von Lamellen 10, 13 über der Breite der Wärmeübertragerplatte 1 mit Bezug auf den Auslass des Einströmkanals 7 beziehungsweise die Einströmung in den Auslass 12 zu erreichen, ist der Auslass 12 auf der entgegengesetzten Seite wie der Auslass aus dem Einströmkanal 7 angeordnet.

In der Figur 1 erkennt man ferner, dass die Lamellen 9 im Einströmkanal in Form einer Vielzahl von einstückigen Lamellenfeldern mit jeweils einer Vielzahl von Lamellen 9 ausgeführt sind, wobei die L-Form der Lamellenfelder den Zwischenraum zwischen zwei benachbarten Stegen 14 des Einströmkanals 7 und den seitlichen Abstand zwischen jeweils einem Steg 14 und dem seitlichen Ende beziehungsweise hier dem die seitliche Wand ausbildenden Steg 18 der Wärmeübertragerplatte 1 vollständig ausfüllt.

Der Wärmeträger, der insbesondere in flüssiger oder gasförmiger Form vorliegen kann, insbesondere das Abgas eines Verbrennungsmotors, strömt auf der Rückseite der hier gezeigten Wärmeübertragerplatte 1 beziehungsweise durch eine auf der Rückseite der hier gezeigten Wärmeübertragerplatte 1 vorgesehene weitere Wärmeübertragerplatte, welche dann hinsichtlich ihrer Gestaltung auf die Art des Wärmeträgers abgestimmt sein kann. Der Wärmeträger strömt vorteilhaft im Gegenstrom zu dem zu verdampfenden Medium, das heißt bei der in Figur 1 gewählten Darstellung von der rechten auf die linke Stirnseite der Wärmeübertragerplatte 1. Selbstverständlich sind auch andere Relativströmungen denkbar, beispielsweise im Gleichstrom oder im Kreuzstrom, letzteres insbesondere durch eine mäanderförmige Strömungsführung des Wärmeträgers.

Bei der gezeigte Ausführung ist somit kein Durchtritt beziehungsweise Durchlass für den Wärmeträger in der in der Figur 1 dargestellten Wärmeübertragerplatte 1 notwendig. Vielmehr dienen die gezeigten Bohrungen 26 dem exakten Ausrichten der einzelnen Wärmeübertragerplatten 1, beispielsweise über durch die Bohrungen 26 geführte Stifte. Alternativ wäre es jedoch auch möglich, in den Wärmeübertragerplatten 1 Öffnungen oder Kanäle für den Wärmeträger vorzusehen, entweder um den Wärmeträger auf die verschiedenen Ebenen des Verdampfers zu verteilen oder um den Wärmeträger mittels derselben Wärmeübertragerplatte 1 zu führen, die auch das zu verdampfende Medium führt.

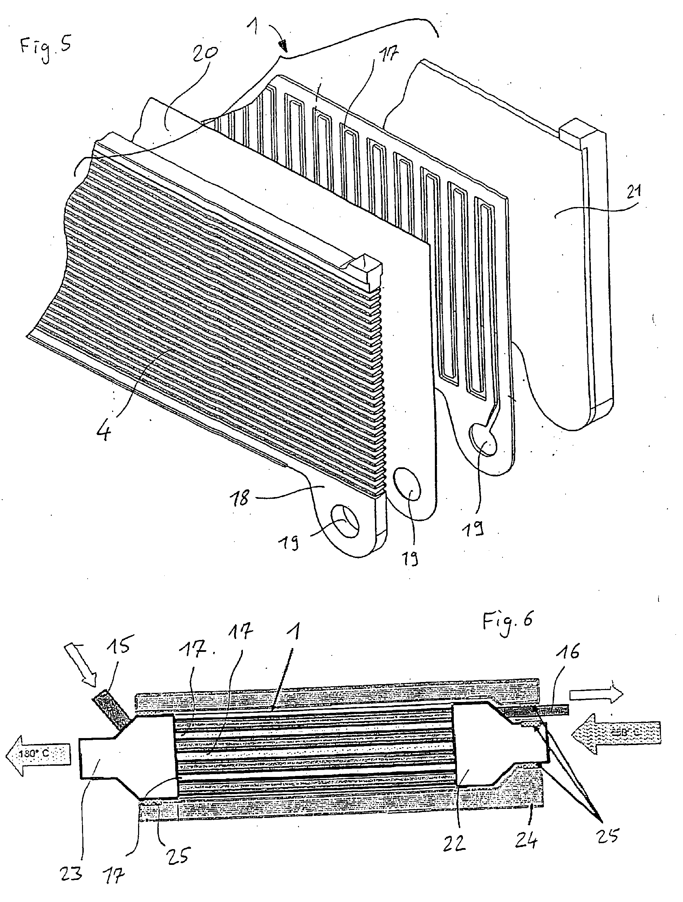

In der Figur 5 ist ein Beispiel für eine solche Bohrung 19 dargestellt, welche auch durch jene Ebene beziehungsweise Platte verläuft, welche das zu verdampfende Medium führt, siehe die Strömungskanäle 4, welche vorwiegend in Richtung der Längsachse verlaufen. Die in der Figur 5 dargestellte Wärmeübertragerplatte 1 ist schichtweise aufgebaut, umfassend vier Platten, die aufeinander geschichtet sind, um eine Ebene zur Strömungsführung des zu verdampfenden Fluids und eine Ebene zur Strömungsführung des Wärmeträgers auszubilden. Die hier gezeigte mäanderförmige Strömungsführung für den Wärmeträger, der durch die Bohrung 19 in die Wärmeübertragerplatte 1 eintritt, ist besonders für einen Verdampfer geeignet, der als Wärmequelle zum Beispiel heißes Kühlmittel oder heiße Öle nutzt. Der mäanderförmige Kanal für den Wärmeträger ist hier auf einer Seite einer Grundplatte 20 angeordnet, welche jener Seite abgewandt ist, die das zu verdampfende Medium in den in Richtung der Längsachse angeordneten Strömungskanälen 4 führt. Durch die mäanderförmige Strömungsführung des Wärmeträgers mit der Strömungsführung in Richtung der Längsachse des zu verdampfenden Mediums wird ein Kreuzstromwärmeübertrager ausgebildet. Der gewählte schichtweise Aufbau mit der das zu verdampfende Medium führende Platte, der Grundplatte 20, der den Wärmeträger führenden Platte und der Abdeckplatte 21, welche in vielfacher Anzahl aufeinandergestapelt werden, ermöglicht eine besonders leichte und kostengünstige Herstellung.

Abweichend von der gezeigten Darstellung ist es natürlich auch möglich, die Führung der in wärmeübertragender Verbindung stehenden Fluide derart zu wählen, dass ein Gleichstromwärmeübertrager oder ein Gegenstromwärmeübertrager oder beliebige Mischformen ausgebildet werden.

Wieder mit Bezug auf die Figur 1 erstreckt sich der Wärmezufuhrbereich 5, in welchem dem zu verdampfenden Medium Wärme aus dem Wärmeträger zugeführt wird, sowohl über den gesamten Einströmkanal 7 als auch den (wenigstens einen) Strömungskanal 4, insbesondere ferner auch den Austrittsbereich mit den Lamellen13,vorteilhaft über die gesamte Erstreckung der Wärmeübertragerplatte 1 in Richtung der Längsachse 2 und/oder der Querachse 3.

Anstelle der in der Figur 1 gezeigten Ausführungsform könnte die Wärmeübertragerplatte 1 auch nur eine einzige Strömungsquerverteilungseinrichtung mit der über der Breite variierenden Anzahl von Lamellen 10, 13 aufweisen. Diese könnte entsprechend den beiden dargestellten Strömungsquerverteilungseinrichtungen mit den Lamellen 10 oder 13 ausgeführt sein, wobei nur eine der beiden, insbesondere jene in Strömungsrichtung hinter den Strömungskanälen 4 eingespart wird. Alternativ wäre es jedoch auch möglich, mit einer einzigen Strömungsquerverteilungseinrichtung strömungsweglängenbedingte Druckverluste sowohl auf der Eintrittsseite als auch auf der Austrittsseite der in Richtung der Längsachse 2 verlaufenden Strömungskanäle 4 auszugleichen. Eine solche Strömungsquerverteilungseinrichtung würde einen entsprechend schrägeren Auslass aus dem Lamellenfeld mit den Lamellen 10 oder alternativ einen entsprechend schrägeren Einlass in das Lamellenfeld mit den Lamellen 13 aufweisen, oder ein Lamellenfeld mit schrägem Auslass und schrägem Einlass, oder andere Maßnahmen innerhalb des jeweiligen Lamellenfeldes, insbesondere durch Verkleinern der Öffnungen für die Strömung in Richtung der Längsachse 2.

In der Figur 2 ist eine der Ausführungsform gemäß der Figur 1 ähnliche Wärmeübertragerplatte 1 dargestellt, wobei für dieselben Bauteile dieselben Bezugszeichen verwendet werden. Ein Unterschied ist die Ausführung der Strömungsquerverteilungseinrichtung vor den Strömungskanälen 4. Diese umfasst eine Drosselstelle 11, gebildet durch einen Steg, der in Richtung der Querachse 3 verläuft. Diese Drosselstelle 11 bewirkt eine Anstauung des zu verdampfenden Mediums, bevor dieses in die Strömungskanäle 4 eintritt. Die Anstauung wiederum bewirkt eine Verteilung des zu verdampfenden Mediums über der gesamten Breite der Wärmeübertragerplatte 1 in Richtung der Querachse 3. Ferner ist die Strömungsquerverteilungseinrichtung in Strömungsrichtung hinter den Strömungskanälen 4 gegenüber der Figur 1 abgewandelt. Besonders vorteilhaft ist es, wenn die in Richtung der Längsachse 2 verlaufenden Strömungskanäle 4 ausbildenden Lamellen 8 bündig an der Drosselstelle 11 beziehungsweise dem für hier vorgesehnen Steg anliegen, sodass sich kein Spalt ausbildet und kein Queraustausch der Strömung zwischen der Drosselstelle 11 und den Strömungskanälen 4 einstellen kann.

Selbstverständlich könnte die Drosselstelle 11 auch mit einem Winkel kleiner als 90 Grad gegenüber der Querachse 3 verlaufen und somit ähnlich schräggestellt sein, wie das axiale Ende des Feldes mit den Lamellen 10 gemäß der Figur 1.

Im gezeigten Ausführungsbeispiel sind vor der Drosselstelle 11 ebenfalls in Richtung der Querachse verlaufende Lamellen 10 vorgesehen, jedoch hier mit derselben Anzahl von Lamellen 10 in Richtung der Längsachse 2 über der gesamten Breite der Wärmeübertragerplatte 1. Jedoch könnten auch hier Lamellen ähnlich wie in der Figur 1 vorgesehen sein.

In Strömungsrichtung hinter den Strömungskanälen 4 sind ebenfalls Lamellen 13 vorgesehen, die in Richtung der Querachse 3 verlaufen. Auch hier ist die Anzahl von hintereinander angeordneten Lamellen 13 über der gesamten Breite der Wärmeübertragerplatte 1 konstant. Alternativ wäre beispielsweise eine Ausführungsform wie in der Figur 1 dargestellt denkbar.

Obwohl in den Figuren 1 und 2 nun verschiedene Ausführungsbeispiele für Strömungsquerverteilungseinrichtungen dargestellt sind, sind weitere Ausführungsformen möglich. Beispielsweise können die axialen Enden der Lamellenfelder durch mehrere, insbesondere durch zwei, winklig zueinander verlaufende Linien oder auch durch eine Bogenform begrenzt sein. Ferner sind andere Maßnahmen mit derselben Wirkung möglich, beispielsweise das Vorsehen von Schwämmen oder anderen den Strömungswiderstand beeinflussenden Strukturen.

In der Figur 3 ist nochmals ein möglicher schichtweiser Aufbau einer erfindungsgemäß ausgeführten Wärmeübertragerplatte 1 gezeigt. Sie umfasst eine Grundplatte 20, auf welcher die Stege 18 sowie die Stege 14 aufgelegt werden. Wie dargestellt, können die Stege 18 und die Stege 14 auch einteilig ausgeführt sein, insbesondere in Form einer einstückigen Strukturplatte. Anschließend können die Lamellen 9, 10, 8 und 13 in den von den Stegen 14, 18 umschlossenen Raum eingelegt werden, bevor von oben eine weitere Platte - die Abdeckplatte 21 - aufgelegt wird, um den Raum mit den Lamellen 9, 10, 8, 13 zusammen mit den Stegen 18 abzudichten. Die Lamellen 9, 10, 8 und 13 bilden im eingelegten Zustand die Konfiguration aus, wie sie in der Figur 1 gezeigt ist.

Besonders vorteilhaft können die Strukturplatte mit den Stegen 14 und 18 sowie die Grundplatte 20 und die Abdeckplatte 21 miteinander verlötet oder durch andere stoffschlüssige Maßnahmen miteinander verbunden werden. Beispielsweise können Lotfolien zwischen die Strukturplatte und die Grundplatte 20 beziehungsweise die Abdeckplatte 21 eingelegt werden, oder das erforderliche Lot wird durch andere bekannte Verfahren an den entsprechenden Stellen zur Verfügung gestellt. Selbstverständlich ist auch eine nicht-stoffschlüssige Montage der genannten Platten möglich.

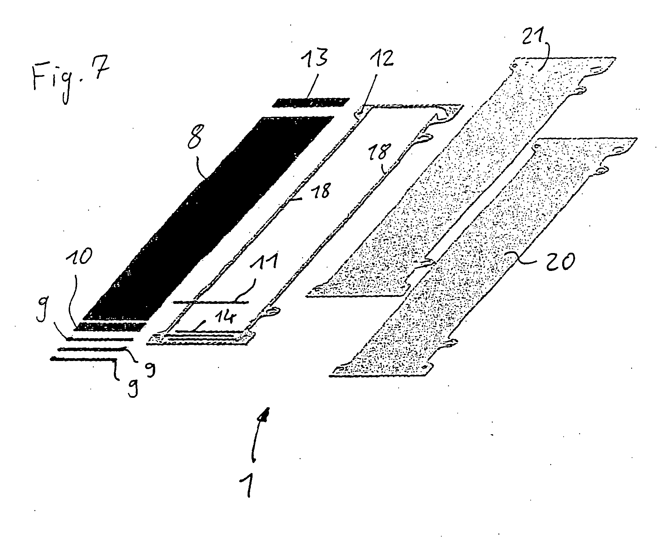

In der Figur 7 sind die entsprechenden Bauteile analog dargestellt, jedoch um eine Konfiguration gemäß der Figur 2 mit der Drosselstelle 11 zwischen den Lamellen 10 und den Lamellen 8 auszubilden, siehe den zusätzlich eingelegten Steg, der gemeinsam mit der Grundplatte und/oder der Abdeckplatte 21 die Drosselstelle 11 ausbildet.

Zwischen der Grundplatte 20 und der Abdeckplatte 21 wird somit das zu verdampfende Medium geführt. Zumindest auf einer der abgewandten Seiten oder auf beiden abgewandten Seiten, hier unterhalb der Grundplatte 20 und oberhalb der Abdeckplatte 21, kann dann der Wärmeträger, dessen Wärme zur Verdampfung des zu verdampfenden Mediums genutzt wird, geführt werden, insbesondere in einem Kanal 17, wie er in den Figuren 5 und 6 dargestellt ist. Alternativ wäre es auch möglich, eine oder beide Platten - Grundplatte 20 und Abdeckplatte 21 - durch eine andere Maßnahme, insbesondere elektrisch oder durch Induktion aufzuheizen oder andere Maßnahmen zum Zuführen von Wärme in das zu verdampfende Medium vorzusehen.

In der Figur 4 ist ein Beispiel für ein Lamellenfeld in einer Draufsicht dargestellt, wie es bei einzelnen oder allen hier abgehandelten Lamellen 9, 10, 8, 13 zum Einsatz gelangen kann. So weisen die Lamellen in Richtung der Hauptströmung, das heißt bei den Lamellen 9, 10 und 13 in Richtung der Querachse 3 und bei den Lamellen 8 in Richtung der Längsachse 2 gesehen, eine winklige Mäanderform auf, deren Umlenkungswirkung bezüglich der Durchströmung auch mit gradlinigen Lamellen mit Stegen erreicht werden könnte. Alternativ können auch entsprechende Bogenformen oder auch rein gradlinige Lamellen verwendet werden. Die Lamellen können geschnitten oder ungeschnitten sein, das heißt Öffnungen für eine Nebenströmung quer zur Hauptströmungsrichtung aufweisen oder die einzelnen Strömungskanäle der Hauptströmung gegeneinander abdichten.

In der Figur 6 ist ein Ausführungsbeispiel eines erfindungsgemäß ausgeführten Verdampfers mit einer Vielzahl von aufeinandergestapelten Wärmeübertragerplatten 1 gezeigt. Dieser weist einen Flüssigkeitseinlass 15 und einen Dampfauslass 16 auf. Ferner ist ein Einlass 22 für einen Wärmeträger sowie ein Auslass 23 für diesen vorgesehen. Der Einlass 22 für den Wärmeträger, insbesondere für Abgas eines Verbrennungsmotors, verteilt den Wärmeträger auf alle wärmeträgerführenden Kanäle 17 der Wärmeübertragerplatten 1. Der Auslass 23 sammelt den Wärmeträger, nachdem dieser durch die Kanäle 17 geströmt ist und führt ihn wieder aus dem Verdampfer ab, mit einer entsprechend verminderten Temperatur. Das über den Flüssigkeitseinlass 15 in den Verdampfer eingeleitete zu verdampfende Medium wird auf die verschiedenen Wärmeübertragerplatten 1 verteilt, durchströmt dort die zuvor beschriebenen Kanäle, wird wieder gesammelt und über den Dampfauslass 16 aus dem Verdampfer in dampfförmigem Zustand ausgeleitet. Die verschiedenen Bauteile sind durch geeignete Dichtungen 25 in einem Gehäuse 24 gegenüber der Umgebung abgedichtet. So ist es beispielsweise möglich, das Gehäuse 24 zu evakuieren, um eine möglichst gute Isolation gegenüber der Umgebung zu erreichen. Auch können weitere Isolationsschichten eingefügt werden.

Die Führung des zu verdampfenden Mediums durch den Verdampfer erfolgt nun derart, wobei die Wärmezufuhr entsprechend ausgebildet ist, dass das zu verdampfende Medium in den Einströmkanälen der verschiedenen Wärmeübertragerplatten 1, siehe die Figuren 1 und 2, im flüssigen Zustand vorliegt, und erste Dampfblasen erst in den in Richtung der Längsachse 2 verlaufenden Kanälen 4, sozusagen im Phasenübergangsbereich auftreten, in welchem der für das zu verdampfende Medium zur Verfügung stehende Strömungsquerschnitt erheblich gegenüber jenem der Einströmkanäle 7 erweitert ist.

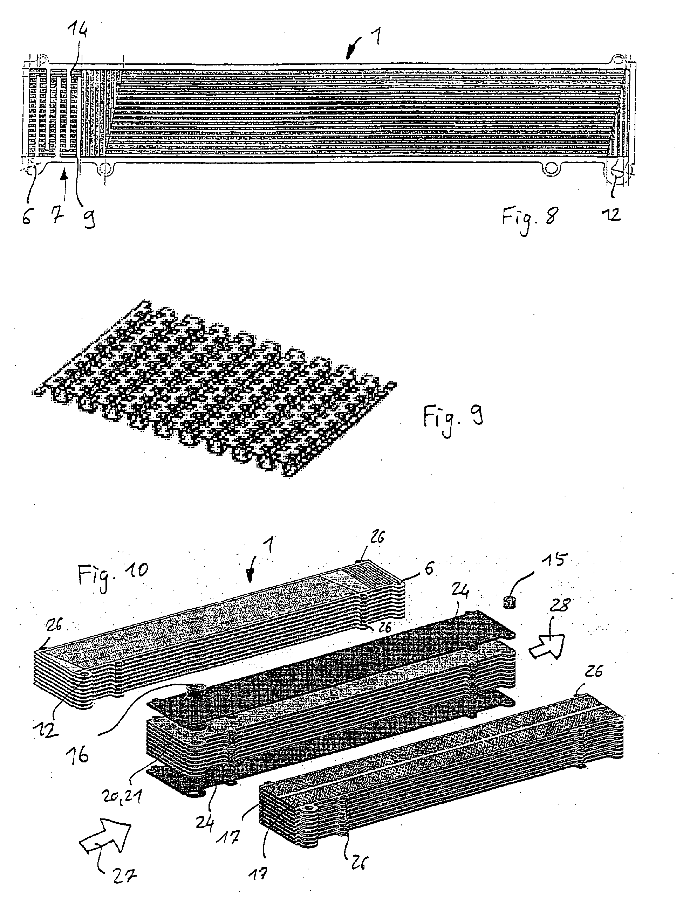

In der Figur 8 ist ein weiteres Ausführungsbeispiel entsprechend jenem in der Figur 1 dargestellt. Vorliegend weist der mäanderförmige Einströmkanal 7 jedoch fünf Stege 14 auf, welche wechselseitig auf den beiden Seiten der Wärmeübertragerplatte 1 beginnen. Auch sind die Lamellen 9 im gesamten mäanderförmigen Einströmkanal 7 in Form eines einteiligen Lamellenfeldes ausgeführt.

Ein Beispiel für ein Lamellenfeld, wie es gemäß der vorliegenden Erfindung an den verschiedenen Stellen der Wärmeübertragerplatte 1 zum Einsatz kommen kann, ist in der Figur 9 dargestellt. Wie man sieht, verlaufen die Lamellen nicht geradlinig, sondern weisen vergleichsweise kurze seitliche Stege auf.

In der Figur 10 ist nochmals in einer Explosionsdarstellung ein besonders kostengünstiger Aufbau eines erfindungsgemäß ausgeführten Verdampfers gezeigt. Man erkennt im oberen Bereich eine Vielzahl von übereinander ausgerichteten Wärmeüberträgerplatten 1 entsprechend jener in der Figur 8. Im unteren Bereich erkennt man abgasseitige Lamellen zur Ausbildung der wärmeträgerführenden Kanäle 17. Die Einströmung und die Abströmung des Abgases erfolgt stirnseitig, siehe die Pfeile 27 und 28. Die Wärmeübertragerplatten 1 und die abgasseitigen Platten mit den Kanälen 17 werden nun wechselseitig zwischen die Grundplatten 20 und Abdeckplatten 21 eingefügt und in das Gehäuse 24 eingebracht, um einen schichtweisen Aufbau zu bilden. Das zu verdampfende Medium strömt über den Flüssigkeitseinlass 15 in den Verdampfer ein und über den Dampfauslass 16 aus dem Verdampfer, der nach dem Gegenstromprinzip aufgebaut ist, aus.

## Patentansprüche

1. Wärmeübertragerplatte (1) für einen Verdampfer;
1.1 mit einer Längsachse (2) und einer Querachse (3), wobei die Querachse (3) senkrecht oder im Wesentlichen senkrecht auf der Längsachse (2) steht;
1.2 mit wenigstens einem Strömungskanal (4), der in Richtung der Längsachse (2) der Wärmeübertragerplatte (1) durch einen Wärmezufuhrbereich (5) der Wärmeübertragerplatte (1) verläuft und das zu verdampfende Medium führt;
1.3 mit einem Einlass (6) für das zu verdampfende Medium, der in strömungsleitender Verbindung mit dem wenigstens einen in Richtung der Längsachse (2) der Wärmeübertragerplatte (1) angeordneten Strömungskanal (4) steht; wobei
1.4 in Richtung der Längsachse (2) zwischen dem Einlass (6) und dem wenigstens einen in Richtung der Längsachse (2) angeordneten Strömungskanal (4) ein mäanderförmiger Einströmkanal (7) vorgesehen ist, der in strömungsleitender Verbindung mit dem Einlass (6) und dem wenigstens einen Strömungskanal (4) steht und das zu verdampfende Medium, das aus dem Einlass (6) zu dem wenigstens einen Strömungskanal (4) strömt, wechselseitig entlang der Querachse (3) in Richtung des wenigstens einen Strömungskanals (4) führt; **dadurch gekennzeichnet, dass**
1.5 der mäanderförmige Einströmkanal (7) durch eine Vielzahl von auf der Wärmeübertragerplatte oder einer Grundplatte (20), welche den Boden oder die Decke des Einströmkanals (7) sowie des wenigstens einen in Richtung der Längsachse (2) angeordneten Strömungskanals (4) ausbildet, stehenden Stegen (14) gebildet wird, die in Richtung der Querachse (3) verlaufen, und der Einströmkanal (7) zwischen den Stegen (14) durch eine Vielzahl von Lamellen (9), die in Richtung der Querachse (3) verlaufen, in einzelne Teilkanäle unterteilt ist.

2. Wärmeübertragerplatte (1) gemäß Anspruch 1, **dadurch gekennzeichnet, dass** eine Vielzahl von nebeneinander angeordneten, in Richtung der Längsachse (2) verlaufenden, das zu verdampfende Medium führenden Strömungskanälen (4) vorgesehen ist, welche derart in strömungsleitender Verbindung mit dem mäanderförmigen Einströmkanal (7) stehen, dass das zu verdampfende Medium aus dem Einströmkanal (7) gleichzeitig parallel durch die Vielzahl der Strömungskanäle (4) strömt.

3. Wärmeübertragerplatte (1) gemäß Anspruch 2, **dadurch gekennzeichnet, dass** die einzelnen Strömungskanäle (4) durch in Richtung der Längsachse (2) verlaufenden Lamellen (8) voneinander abgegrenzt sind, wobei die Lamellen (8) entweder einander benachbarte Strömungskanäle (4) gegeneinander abdichten oder mit Öffnungen, insbesondere Schlitzen, versehen sind, um einen teilweisen Austausch des durch die einander benachbarten Strömungskanäle (4) strömenden zu verdampfenden Mediums zu ermöglichen.

4. Wärmeübertragerplatte (1) gemäß einem der Ansprüche 1 bis 3, **dadurch gekennzeichnet, dass** der Einströmkanal (7) durch Lamellen (9), die in Richtung der Querachse (3) verlaufen, in einzelne Teilkanäle unterteilt ist, wobei die Lamellen (9) insbesondere Öffnungen aufweisen, welche einander benachbarte Teilkanäle strömungsleitend miteinander verbinden.

5. Wärmeübertragerplatte (1) gemäß einem der Ansprüche 1 bis 4, **dadurch gekennzeichnet, dass** in Richtung der Längsachse (2) zwischen dem mäanderförmigen Einströmkanal (7) und dem wenigstens einen in Richtung der Längsachse (2) verlaufenden Strömungskanal (4) eine Strömungsquerverteilungseinrichtung vorgesehen ist, welche strömungsweglängenbedingte Druckverluste zwischen dem Austritt aus dem Einströmkanal (7) und verschiedenen Positionen des Eintritts in den wenigstens einen Strömungskanal (4) und/oder zwischen dem Austritt aus dem Einströmkanal (7) und Eintritten der verschiedenen nebeneinander angeordneten Strömungskanäle (4) ausgleicht.

6. Wärmeübertragerplatte (1) gemäß Anspruch 5, **dadurch gekennzeichnet, dass** in Richtung der Längsachse (2) zwischen dem mäanderförmigen Einströmkanal (7) und dem wenigstens einen in Richtung der Längsachse (2) verlaufenden Strömungskanal (4) eine Vielzahl von in Richtung der Längsachse (2) hintereinander angeordneten, in Richtung der Querachse (3) verlaufenden Lamellen (10), welche das zu verdampfende Medium zu dem wenigstens einen in Richtung der Längsachse verlaufenden Strömungskanal (4) führen, angeordnet ist, wobei die Lamellen (10) Öffnungen aufweisen, die eine Strömung des zu verdampfenden Mediums in Richtung der Längsachse (2) mit vergleichsweise höherem Strömungswiderstand ermöglichen als in Richtung der Querachse (3), und die Anzahl der in Richtung der Längsachse (2) hintereinander angeordneten Lamellen (10) über der Breite der Wärmeübertragerplatte (1) in Richtung der Querachse (3) variiert, wobei auf jenem Breitenabschnitt, insbesondere an einem seitlichen Ende, in welchem der Eintritt des zu verdampfenden Mediums in die hintereinander angeordneten Lamellen (10) vorgesehen ist, die vergleichsweise größte Anzahl von Lamellen (10) hintereinander vorgesehen ist, und diese Anzahl mit zunehmender Entfernung von dem Eintritt in Richtung der Querachse (3) abnimmt.

7. Wärmeübertragerplatte (1) gemäß einem der Ansprüche 5 oder 6, **dadurch gekennzeichnet, dass** in Richtung der Längsachse (2) zwischen dem mäanderförmigen Einströmkanal (7) und dem wenigstens einen in Richtung der Längsachse (2) verlaufenden Strömungskanal (4) eine Drosselstelle (11) vorgesehen ist, welche über der gesamten Breite des wenigstens einen in Richtung der Längsachse (2) verlaufenden Strömungskanals (4) oder aller Strömungskanäle (4) vorgesehen ist, und eine Anstauung des zu verdampfenden Mediums über dieser gesamten Breite bewirkt.

8. Wärmeübertragerplatte (1) gemäß Anspruch 7, **dadurch gekennzeichnet, dass** die Drosselstelle (11) durch einen oder eine Vielzahl von Stegen ausgebildet wird, welcher/welche in Richtung der Querachse (3) oder schräg zur Querachse (3) mit einem Winkel kleiner als 90 Grad zur Querachse (3) verläuft und eine oder mehrere Drosselöffnungen aufweist oder begrenzt.

9. Wärmeübertragerplatte (1) gemäß einem der Ansprüche 5 bis 7, **dadurch gekennzeichnet, dass** ein Auslass (12) für das teilweise oder vollständig verdampfte Medium vorgesehen ist, der in strömungsleitender Verbindung mit dem wenigstens einen in Richtung der Längsachse (2) verlaufenden Strömungskanal (4) steht, und in Richtung der Längsachse (2) zwischen dem Strömungskanal (4) und dem Auslass (12) eine zweite Strömungsquerverteilungseinrichtung vorgesehen ist, welche strömungsweglängenbedingte Druckverluste zwischen dem Austritt aus dem wenigstens einen Strömungskanal (4) und dem Auslass (12) ausgleicht, insbesondere in Form einer Vielzahl von in Richtung der Längsachse (2) hintereinander angeordneten, in Richtung der Querachse (3) verlaufenden Lamellen (13), welche das teilweise oder vollständig verdampfte Medium in Richtung des Auslasses (12) führen, wobei die Lamellen (13) Öffnungen aufweisen, die eine Strömung des teilweise oder vollständig verdampften Mediums in Richtung der Längsachse (2) mit vergleichsweise höherem Strömungswiderstand ermöglichen als in Richtung der Querachse (3), und die Anzahl der in Richtung der Längsachse (2) hintereinander angeordneten Lamellen (13) über der Breite der Wärmeübertragerplatte (1) in Richtung der Querachse (3) variiert, und auf jenem Breitenabschnitt, in welchem der Auslass (12) vorgesehen ist, die vergleichsweise größte Anzahl von Lamellen (13) hintereinander vorgesehen ist, und diese Anzahl mit zunehmender Entfernung vom Auslass (12) in Richtung der Querachse (3) abnimmt.

10. Wärmeübertragerplatte (1) gemäß einem der Ansprüche 1 bis 9, **dadurch gekennzeichnet, dass** der Einströmkanal (7) durch eine Vielzahl von auf der Wärmeübertragerplatte (1) stehenden Stegen (14) gebildet wird, die in Richtung der Querachse (3) verlaufen, hintereinander in Richtung der Längsachse (2) abwechselnd beginnend auf je einer der beiden entgegengesetzten Seiten der Wärmeübertragerplatte (1) und sich erstreckend bis zu einem vorgegebenen Abstand zu der jeweils anderen Seite hintereinander angeordnet sind, sodass das zu verdampfende Medium jeweils entlang eines jeden gesamten Steges (14) in Richtung der Querachse (3) geführt wird, bis es durch den Abstand am seitlichen Ende des Steges (14) in Richtung der Längsachse (2) zu dem nächsten Steg (14) strömt.

11. Wärmeübertragerplatte (1) gemäß den Ansprüchen 4 und 10, **dadurch gekennzeichnet, dass** die Lamellen (9) im Einströmkanal (7) in eine Vielzahl von einstückigen Lamellenfeldern mit einer Vielzahl von Lamellen (9) unterteilt sind, und die Lamellenfelder in einer Draufsicht eine L-Form aufweisen, welche den Zwischenraum zwischen zwei benachbarten Stegen (14) des Einströmkanals (7) und den seitlichen Abstand ausfüllt.

12. Verdampfer zur Verdampfung eines flüssigen Mediums mit einer Vielzahl von aufeinandergestapelten Wärmeübertragerplatten (1) gemäß einem der Ansprüche 1 bis 11, umfassend
12.1 einen Flüssigkeitseinlass (15), der mit den Einlässen (6) auf den Wärmeübertragerplatten (1) in strömungsleitender Verbindung steht;
12.2 mit einem Dampfauslass (16), der mit den in Richtung der Längsachse (2) angeordneten Strömungskanälen (4) auf den Wärmeübertragerplatten (1) und insbesondere mit den Auslässen (12) auf den Wärmeübertragerplatten (1) in strömungsleitender Verbindung steht;
12.3 mit einem einen Wärmeträger führenden Kanal (17) und/oder mit einer anderen Wärmequelle, um die Wärmeübertragerplatten (1) zur Verdampfung des von diesen durch die Einströmkanäle (7) und die in Richtung der Längsachse (2) angeordneten Strömungskanäle (4) geführten Mediums mit Wärme aus dem Wärmeüberträger oder der anderen Wärmequelle zu beaufschlagen,
**dadurch gekennzeichnet, dass**
12.4 die Führung des zu verdampfenden Mediums mittels der Einströmkanäle (7) und den in Richtung der Längsachse (2) angeordneten Strömungskanäle (4) derart wärmebeaufschlagt erfolgt, dass das zu verdampfende Medium in den Einströmkanälen (7) vollständig oder im Wesentlichen im flüssigen Zustand und in den in Richtung der Längsachse (2) angeordneten Strömungskanälen (4) in wenigstens teilweise dampfförmigen Zustand vorliegt.

13. Antriebsstrang, insbesondere eines Kraftfahrzeugs, mit einem Verbrennungsmotor und einem Dampfmotor, wobei der Verbrennungsmotor einen Abgasstrom erzeugt, und der Dampfmotor in einem Dampfkreislauf angeordnet ist, **dadurch gekennzeichnet, dass** ein Verdampfer gemäß Anspruch 12 vorgesehen ist, dessen einen Wärmeträger führender Kanal (17) mit dem Abgasstrom als Wärmeträger durchströmt wird, und der mit Medium des Dampfkreislaufes zur Verdampfung desselben mittels Wärme aus dem Abgasstrom beaufschlagt ist.

## Claims

1. A heat exchanger plate (1) for an evaporator;
1.1 with a longitudinal axis (2) and a transverse axis (3), with the transverse axis (3) being disposed perpendicularly or substantially perpendicularly to the longitudinal axis (2);
1.2 with at least one flow channel (4) which extends in the direction of the longitudinal axis (2) of the heat exchanger plate (1) through a heat supply area (5) of the heat exchanger plate (1) and conducts the medium to be evaporated;
1.3 with an inlet (6) for the medium to be evaporated, which inlet is in a flow-conducting connection with the at least one flow channel (4) arranged in the direction of the longitudinal axis (2) of the heat exchanger plate (1), with
1.4 a meandering inflow channel (7) being provided in the direction of the longitudinal axis (2) between the inlet (6) and the at least one flow channel (4) arranged in the direction of the longitudinal axis (2), which inflow channel is in a flow-conducting connection with the inlet (6) and the at least one flow channel (4), and conducts the medium which flows out of the inlet (6) to the at least one flow channel (4) in an alternating manner along the transverse axis (3) in the direction of the at least one flow channel (4), **characterized in that**
1.5 the meandering inflow channel (7) is formed by a plurality of webs (14) which are disposed on the heat exchanger plate or a base plate (20) which forms the bottom or top of the inflow channel (7) and the at least one flow channel (4) arranged in the direction of the longitudinal axis (2), which webs extend in the direction of the transverse axis (3), and the inflow channel (7) between the webs (14) is subdivided into individual partial channels by a plurality of plates (9) which extend in the direction of the transverse axis (3).

2. A heat exchanger plate (1) according to claim 1, **characterized in that** a plurality of adjacently arranged flow channels (4) are provided which extend in the direction of the longitudinal axis (2), conduct the medium to be evaporated and are in a flow-conducting connection with the meandering inflow channel (7) in such a way that the medium to be evaporated flows from the inflow channel (7) simultaneously parallel through the plurality of flow channels (4).

3. A heat exchanger plate (1) according to claim 2, **characterized in that** the individual flow channels (4) are delimited from one another by plates (8) extending in the direction of the longitudinal axis (2), with the plates (8) either sealing mutually adjacent flow channels (4) from one another, or are provided with openings, especially slots, in order to enable a partial exchange of the medium to be evaporated which flows through the mutually adjacent flow channels (4).

4. A heat exchanger plate (1) according to one of the claims 1 to 3, **characterized in that** the inflow channel (7) is subdivided into individual partial channels by plates (9) which extend in the direction of the transverse axis (3), with the plates (9) especially comprising openings which connect mutually adjacent partial channels in a flow-conducting manner with one another.

5. A heat exchanger plate (1) according to one of the claims 1 to 4, **characterized in that** a transverse distribution device for the flow is provided in the direction of the longitudinal axis (2) between the meandering inflow channel (7) and the at least one flow channel (4) extending in the direction of the longitudinal axis (2), which transverse distribution device compensates pressure losses caused by the length of the flow path between the outlet from the inflow channel (7) and the various positions of the inlet into the at least one flow channel (4) and/or between the outlet from the inflow channel (4) and the inlets of the various flow channels (4) arranged next to one another.

6. A heat exchanger plate (1) according to claim 5, **characterized in that** a plurality of plates (10) are arranged in the direction of the longitudinal axis (2) between the meandering inflow channel (7) and the at least one flow channel (4) extending in the direction of the longitudinal axis (2), which plates are arranged one after the other in the direction of the longitudinal axis (2), extend in the direction of the transverse axis (3) and conduct the medium to be evaporated to the at least one flow channel (4) extending in the direction of the longitudinal axis, with the plates (10) having openings which enable a flow of the medium to be evaporated in the direction of the longitudinal axis (2) with comparatively higher flow resistance than in the direction of the transverse axis (3), and the number of the plates (10) arranged one after the other in the direction of the longitudinal axis (2) varying over the width of the heat exchanger plate (1) in the direction of the transverse axis (3), with the comparatively largest number of plates (10) one after the other being provided on the width section, especially at a lateral end, in which the inlet of the medium to be evaporated to the successively arranged plates (10) is provided, and this number decreases with rising distance from the inlet in the direction of the transverse axis (3).

7. A heat exchanger plate (1) according to one of the claims 5 or 6, **characterized in that** a throttling point (11) is provided in the direction of the longitudinal axis (2) between the meandering inflow channel (7) and the at least one flow channel (4) extending in the direction of the longitudinal axis (2), which throttling point is provided over the entire width of the at least one flow channel (4) extending in the direction of the longitudinal axis (2) or all flow channels (4) and causes the backing up of the medium to be evaporated over said entire width.

8. A heat exchanger plate (1) according to claim 7, **characterized in that** the throttling point (11) is formed by one web or a plurality thereof, extending in the direction of the transverse axis (3) or obliquely in relation to the transverse axis (3) at an angle of less than 90 degrees to the transverse axis (3) and comprising or delimiting one or several throttle openings.

9. A heat exchanger plate (1) according to one of the claims 5 to 7, **characterized in that** an outlet (12) for the partly or completely evaporated medium is provided, which outlet is in a flow-conducting connection with the at least one flow channel (4) extending in the direction of the longitudinal axis (2), and a second transverse distribution device for the flow is provided between the flow channel (4) and the outlet (12) in the direction of the longitudinal axis (2), which transverse distribution device compensates pressure losses caused by the length of the flow path between the exit from the at least one flow channel (4) and the outlet (12), especially in the form of a plurality of plates (13) which are arranged one after the other in the direction of the longitudinal axis (2) and extend in the direction of the transverse axis (3), which plates conduct the partly or fully evaporated medium in the direction of the outlet (12), with the plates (13) having openings which enable a flow of the partly or fully evaporated medium in the direction of the longitudinal axis (2) with a comparatively higher flow resistance than in the direction of the transverse axis (3), and the number of the plates (13) arranged one after the other in the direction of the longitudinal axis (2) varies over the width of the heat exchanger plate (1) in the direction of the transverse axis (3), and the comparatively largest number of plates (13) behind one another is provided on the width section in which the outlet (12) is provided, and said number decreases with rising distance from the outlet (12) in the direction of the transverse axis (3).

10. A heat exchanger plate (1) according to one of the claims 1 to 9, **characterized in that** the inflow channel (7) is formed by a plurality of webs (14) disposed on the heat exchanger plate (1), which webs extend in the direction of the transverse axis (3) and are arranged one after the other in the direction of the longitudinal axis (2) in an alternating fashion by starting on one of the two opposite sides of the heat exchanger plate (1) and extending up to a predetermined distance to the respective other side behind one another, so that the medium to be evaporated is respectively conducted along each entire web (14) in the direction of the transverse axis (3) until it flows through the distance at the lateral end of the web (14) in the direction of the longitudinal axis (2) up to the next web (14).

11. A heat exchanger plate (1) according to the claims 4 and 10, **characterized in that** the plates (9) in the inflow channel (7) are subdivided into a plurality of integral fields of plates with a plurality of plates (9), and the fields of plates have an L-shape in a top view which fills the intermediate space between two adjacent webs (14) of the inflow channel (7) and the lateral distance.

12. An evaporator for evaporating a fluid medium with a plurality of stacked heat exchanger plates (1) according to one of the claims 1 to 11, comprising
12.1 a fluid inlet (15) which is in flow-conducting connection with the inlets (6) on the heat exchanger plates (1);
12.2 with a vapour outlet (16) which is in flow-conducting connection with the flow channels (4) arranged in the direction of the longitudinal axis (2) on the heat exchanger plates (1) and especially with the outlets (12) on the heat exchanger plates (1);
12.3 with a channel (17) conducting a heat carrier and/or with any other heat source in order to supply heat from the heat carrier or the other heat source for evaporating the medium which is conducted by the same through the inflow channels (7) and the flow channels (4) arranged in the direction of the longitudinal axis (2);
**characterized in that**
12.4 the conduction of the medium to be evaporated by means of the inflow channels (7) and the flow channels (4) arranged in the direction of the longitudinal axis (2) occurs with supply of heat in such a way that the medium to be evaporated is present in the inflow channels (7) in a completely or substantially fluid state and is present in an at least partly vaporous state in the flow channels (4) arranged in the direction of the longitudinal axis (2).

13. A drive train, especially a motor vehicle, comprising an internal combustion engine and a steam motor, with the internal combustion engine generating an exhaust gas flow, and the steam motor is arranged in a steam circuit, **characterized in that** an evaporator according to claim 12 is provided, with the exhaust gas flow as the heat carrier flowing through the channel (17) conducting a heat carrier, and is supplied with medium of the steam circuit for the evaporation of the same by means of heat from the exhaust gas flow.

## Revendications

1. Plaque d'échangeur thermique (1) pour évaporateur;
1.1 pourvue d'un axe longitudinal (2) et d'un axe transversal (3), où l'axe transversal (3) est perpendiculaire ou sensiblement perpendiculaire sur l'axe longitudinal (2);
1.2 ayant au moins un canal d'écoulement (4), circulant en direction de l'axe longitudinal (2) de la plaque d'échangeur thermique (1) par le biais d'une zone d'acheminement thermique (5) de la plaque d'échangeur thermique (1) et guidant le milieu à évaporer;
1.3 ayent une entrée (6) pour le milieu à évaporer, entrée en liaison avec guidage d'écoulement avec ledit au moins un canal d'écoulement (4) disposé en direction de l'axe longitudinal (2) de la plaque d'échangeur thermique (1); où
1.4 un canal d'admission (7) en méandres est prévu en direction de l'axe longitudinal (2) entre l'entrée (6) et ledit au moins un canal d'écoulement (4) disposé en direction de l'axe longitudinal (2),
qui est en liaison avec guidage d'écoulement avec l'entrée (6) et ledit au moins un canal d'écoulement (4) et le milieu à évaporer, s'écoulant de l'entrée (6) vers ledit au moins un canal d'écoulement (4), conduit alternativement le long de l'axe transversal (3) en direction dudit au moins un canal d'écoulement (4);
**caractérisée en ce que**
1.5 le canal d'admission (7) en méandres est constitué d'une pluralité d'entretoises (14) s'étendant depuis la plaque d'échangeur thermique ou d'une plaque de base formant le sol ou le couvercle du canal d'admission (7) de même que depuis ledit au moins un canal d'écoulement (4) disposé en direction de l'axe longitudinal (2), entretoises s'étendant dans le sens de l'axe transversal (3), et le canal d'admission (7) entre les entretoises (14) est divisé en divers canaux partiels par une pluralité de lamelles (9) s'étendant en direction de l'axe transversal (3).

2. Plaque d'échangeur thermique (1) selon la revendication 1, **caractérisée en ce qu'**une pluralité de canaux d'écoulement (4) guidant le milieu à évaporer, s'étendant en direction de l'axe longitudinal (2) et disposés l'un à côté de l'autre, canaux situés dans une telle liaison avec guidage d'écoulement avec le canal d'admission (7) en méandres, que le milieu à évaporer s'écoule du canal d'admission (7) simultanément en parallèle à travers la pluralité de canaux d'écoulement (4).

3. Plaque d'échangeur thermique (1) selon la revendication 2, **caractérisée en ce que** les différents canaux d'écoulement (4) sont séparés les uns des autres par des lamelles (8) s'étendant en direction de l'axe longitudinal (2), où les lamelles (8) assurent l'étanchéité des canaux d'écoulement (4) voisins les uns par rapport aux autres ou sont munis d'ouvertures, en particulier de fentes, pour permettre un échange partiel du milieu à évaporer et passant par les canaux d'écoulement voisins (4).

4. Plaque d'échangeur thermique (1) selon l'une des revendications 1 à 3, **caractérisée en ce que** le canal d'admission (7) est divisé en divers canaux partiels par des lamelles (9) s'étendant en direction de l'axe transversal (3), où les lamelles (9) présentent en particulier des ouvertures reliant entre eux des canaux partiels voisins en guidant l'écoulement.

5. Plaque d'échangeur thermique (1) selon l'une des revendications 1 à 4, **caractérisée en ce qu'**un dispositif de répartition transversale d'écoulement est prévu en direction de l'axe longitudinal (2) entre le canal d'admission (7) en méandres et ledit au moins un canal d'écoulement (4) circulant en direction de l'axe longitudinal (2), pour compenser des pertes de pression longitudinales sur le trajet d'écoulement entre la sortie du canal d'admission (7) et diverses positions de l'entrée dans ledit au moins un canal d'écoulement (4) et/ou entre la sortie du canal d'admission (7) et l'entrée des différents canaux d'écoulement (4) disposés les uns à côté des autres.

6. Plaque d'échangeur thermique (1) selon la revendication 5, **caractérisée en ce qu'**en direction de l'axe longitudinal (2) entre le canal d'admission (7) en méandres et ledit au moins un canal d'écoulement (4) circulant en direction de l'axe longitudinal se trouve une pluralité de lamelles (10) disposées l'une derrière l'autres et s'étendant en direction de l'axe longitudinal (2) dans le sens de l'axe transversal, lamelles guidant le milieu à évaporer vers ledit au moins un canal d'écoulement (4) s'étendant en direction de l'axe longitudinal, où les lamelles (10) présentent des ouvertures, qui permettent un écoulement du milieu à évaporer en direction de l'axe longitudinal (2) avec une résistance d'écoulement comparativement plus élevée qu'en direction de l'axe transversal (3), et le nombre des lamelles (10) disposées l'une derrière l'autres en direction de l'axe longitudinal (2) varie sur la largeur de la plaque d'échangeur thermique (1) dans le sens de l'axe transversal (3), où sur chaque section de largeur, en particulier en une extrémité latérale, dans laquelle est prévue l'entrée du milieu à évaporer dans les lamelles (10) disposées l'une derrière l'autres, les lamelles (10) en nombre comparativement extrême sont situées les unes derrière les autres et ce nombre baisse lorsqu'elles s'éloignent de l'entrée dans le sens de l'axe transversal (3).

7. Plaque d'échangeur thermique (1) selon l'une des revendications 5 ou 6, **caractérisée en ce qu'**un point d'étranglement (11) est prévu en direction de l'axe longitudinal (2) entre le canal d'admission (7) en méandres et ledit au moins un canal d'écoulement (4) circulant en direction de l'axe longitudinal, point prévu sur toute la largeur dudit au moins un canal d'écoulement (4) ou de tous les canaux d'écoulement (4) s'étendant en direction de l'axe longi-tudinal (2), et provoque une accumulation du milieu à évaporer sur toute la largeur.

8. Plaque d'échangeur thermique (1) selon la revendication 7, **caractérisée en ce que** le point d'étranglement (11) est constitué d'une entretoise ou d'une pluralité d'entretoises, s'étendant dans le sens de l'axe transversal (3) ou perpendiculairement à l'axe transversal (3) avec un angle inférieur à 90 degrés par rapport à l'axe transversal (3) et présentant ou délimitant une ou plusieurs ouvertures d'étranglement.

9. Plaque d'échangeur thermique (1) selon l'une des revendications 5 à 7, **caractérisée en ce qu'**une sortie (12) est prévue pour le milieu partiellement ou complètement évaporé, en liaison avec guidage d'écoulement avec ledit au moins un canal d'écoulement (4) disposé en direction de l'axe longitudinal (2), et un second dispositif de répartition transversale d'écoulement est prévu en direction de l'axe longitudinal (2) entre le canal d'écoulement (4) et la sortie (12), pour compenser les pertes de pression longitudinales sur le trajet d'écoulement entre la sortie dudit au moins canal d'écoulement (4) et la sortie (12), en particulier sous forme d'une pluralité de lamelles (13) s'étendant dans le sens de l'axe transversal (3) et disposées les unes derrière les autres en direction de l'axe longitudinal (2), lamelles guidant le milieu partiellement ou complètement évaporé dans la direction de la sortie (12) où les lamelles (13) présentent des ouvertures, qui permettent un écoulement du milieu partiellement ou complètement évaporé en direction de l'axe longitudinal (2) avec une résistance d'écoulement comparativement plus élevée qu'en direction de l'axe transversal (3), et le nombre des lamelles (13) disposées l'une derrière l'autres en direction de l'axe longitudinal (2) varie sur la largeur de la plaque d'échangeur thermique (1) dans le sens de l'axe transversal (3), et sur la section de largeur, dans laquelle la sortie (12) est aménagée, les lamelles (13) en nombre comparativement maximal de lamelles sont situées les unes derrière les autres, et ce nombre baisse lorsqu'elles s'éloignent de la sortie (12) dans le sens de l'axe transversal (3).

10. Plaque d'échangeur thermique (1) selon l'une des revendications 1 à 9, **caractérisée en ce que** le canal d'admission (7) est constitué d'une pluralité d'entretoises (14) situées sur la plaque d'échangeur thermique (1), entretoises s'étendant dans le sens de l'axe transversal (3), les unes derrière les autres en direction de l'axe longitudinal (2) en commençant alternativement par l'un des deux côtés opposés de la plaque d'échangeur thermique (1) et s'étendant jusqu'à une certaine distance de l'autre coté respectif, entretoises disposées l'une derrière l'autres, de sorte que le milieu à évaporer est guidé respectivement le long d'une entretoise totale (14) dans le sens de l'axe transversal (3), pour s'écouler à travers la distance sur le côté latéral de l'entroise (14) en direction de l'axe longitudinal (2) jusqu'à l'entre-toise suivante (14).

11. Plaque d'échangeur thermique (1) selon les revendications 4 et 10, **caractérisée en ce que** les lamelles (9) sont réparties dans le canal d'admission (7) en une pluralité de champs de lamelles d'un seul tenant avec une pluralité de lamelles (9), et les champs de lamelles sont en forme de L vues de dessus, qui remplissent l'espace intermédiaire entre deux entretoises voisines (14) du canal d'admission (7) et la distance latérale.

12. Evaporateur pour l'évaporation d'un milieu liquide muni d'une pluralité de plaques d'échangeur thermique empilées les unes sur les autres (1) selon l'une des revendications 1 à 11, comprenant
12.1 une entrée de liquide (15), en liaison avec guidage d'écoulement avec les entrées (6) sur les plaques d'échangeur thermique (1);
12.2 munie d'une sortie de vapeur (16), en liaison avec guidage d'écoulement avec les canaux d'écoulement (4) disposés en direction de l'axe longitudinal (2) sur les plaques d'échangeur thermique (1) et en particulier avec les sorties (12) sur les plaques d'échangeur thermique (1);
12.3 munie d'un canal (17) guidant un caloporteur et/ou une autre source de chaleur, pour soumettre à la chaleur provenant du caloporteur ou de l'autre source de chaleur les plaques d'échangeur thermique (1) servant à l'évaporation du milieu guidé par les canaux d'écoulement (4) disposés en direction de l'axe longitudinal (2) et à travers les canaux d'admission (7), **caractérisée en ce que**
12.4 le milieu à évaporer est guidé à l'aide des canaux d'admission (7) et des canaux d'écoulement (4) disposés en direction de l'axe longitudinal (2) avec une telle sollicitation thermique, que le milieu à évaporer se trouve dans les canaux d'admission (7) complètement ou sensiblement en phase liquide et dans les canaux d'écoulement (4) disposés dans la direction de l'axe longitudinal (2) en phase vapeur au moins partiellement.

13. Train d'entraînement, en particulier d'un véhicule automobile, muni d'un moteur à combustion et un moteur à vapeur, où le moteur à combustion génère un courant de gaz d'échappement, et le moteur à vapeur est disposé dans un circuit de vapeur, **caractérisé en ce qu'**un évaporateur est prévu selon la revendication 12, dont le canal (17) guidant un caloporteur est parcouru par le courant de gaz d'échappement sous forme de caloporteur et qui est exposé au milieu du circuit de vapeur servant à l'évaporation de celui-ci à l'aide de la chaleur provenant du courant de gaz d'échappement.
